# EUROPÄISCHE PATENTSCHRIFT

(11) **EP 0 574 972 B1**
(45) Veröffentlichungstag und Bekanntmachung des Hinweises auf die Patenterteilung: **15.11.1995**
(21) Anmeldenummer: 93201571.2
(22) Anmeldetag: 02.06.1993
(51) Int. Cl.: B05B 15/12, C02F 11/00

(54) **Verfahren und Vorrichtung zur Aufbereitung von Wasserlack-Koagulat bzw. -Filtrat**
Method and apparatus for treating a water-based paint coagulate or filtrate
Procédé et dispositif de traitement d'un coagulat ou d'un filtrat de peinture à base d'eau

(30) Priorität: 10.06.1992 DE 4218964
(43) Veröffentlichungstag der Anmeldung: 22.12.1993
(73) Patentinhaber: LÖSCH UMWELTSCHUTZ AG, 12355 Berlin (DE)
(72) Erfinder: Upgang, Hubert, W-4600 Dortmund 1 (DE); Brodt, Peter, W-6270 Idstein-Eschenhahn (DE); Persau, Claudia, Dr., W-6000 Frankfurt am Main 70 (DE)
(74) Vertreter: Rieger, Harald, Dr.

(56) Entgegenhaltungen:
- EP-A- 0 488 449

## Beschreibung

Die Erfindung betrifft ein Verfahren und eine Vorrichtung zur kontinuierlichen Aufbereitung von bei der Spritzverarbeitung von Wasserlacken aus dem im Kreislauf geführten Wasser durch Koagulation oder Filtration, insbesondere Ultrafiltration, gewonnenem, 50 bis 80 Gew.% Wasser, 10 bis 30 Gew.% Bindemittel, 1 bis 25 Gew.% Pigmente/Füllstoffe, 0 bis 15 Gew.% organische Lösemittel enthaltendes Wasserlack-Koagulat bzw. -Filtrat.

Bei der Spritzverarbeitung von Wasserlacken entsteht sogenanntes Overspray, das von der Spritzkabinenluft aufgenommen, aus dieser mit im Kreislauf geführtem Wasser ausgewaschen wird und unter Zusatz von Koagulierungsmittel als Wasserlack-Koagulat sedimentiert oder aufschwimmt. Bei der Verwendung von Koagulierungsmittel aus pulverförmigen Tonmineralien auf oxidischer oder silikatischer Basis enthält das Wasserlack-Koagulat in der Regel zu über 50 % Wasser und bis zu 50 % Wasserlack. Da sich aus diesem Koagulat das Wasser nicht auskneten und der Wasserlack bzw. dessen Komponenten nicht ohne weiteres auswaschen lassen, ist es üblich, die Wasserlack-Koagulate entweder zu deponieren oder thermisch zu beseitigen. Bekannt ist auch, das Wasserlack-Overspray aus dem im Kreislauf geführten Waschwasser durch Anwendung der Ultrafiltration aufzukonzentrieren. Das dabei anfallende Overspray-Filtrat muß ebenfalls deponiert oder thermisch verwertet werden.

Ein Verfahren und eine Vorrichtung zur Behandlung von solchen Wasserlack-Koagulaten ist aus EP-A-0 488 449 bekannt.

Es ist die Aufgabe der vorliegenden Erfindung, ein Verfahren und eine Vorrichtung zur Durchführung des Verfahrens zu schaffen, die es ermöglichen, aus Overspray-Koagulaten bzw. -Filtraten von Wasserlacken die einzelnen Komponenten, wie Bindemittel, Pigmente/Füllstoffe - bis zu 50 % der Füllstoffe können ggf. aus Koagulierungsmittel bestehen - und organische Lösemittel, wenigstens zum überwiegenden Teil zurückzugewinnen, um dadurch Erstrohstoffe und Energie für deren Herstellung zu sparen und eine Deponierung oder thermische Vernichtung der Koagulate bzw. Filtrate mit den bekannten schädlichen Wirkungen auf die Umwelt zu vermeiden.

Gelöst ist diese Aufgabe in der Weise, daß das Wasserlack-Koagulat bzw. -Filtrat mit organischem Lösemittel vermischt, das dabei gebildete Solvat filtriert, das an Lösemittel reiche, Wasser, Pigmente/Füllstoffe und einen kleinen Anteil Bindemittel enthaltende Retentat getrocknet, das an Lösemittel reiche, Bindemittel und Wasser enthaltende Permeat destilliert, der an Bindemittel reiche, Lösemittel und einen kleinen Anteil Wasser aufweisende Rückstand der Destillation in vollentsalztem Wasser dispergiert, die Dispersion destilliert, die beim Trocknen des Retentats und der Destillation des Permeats sowie der Destillation der Dispersion anfallenden, aus Sattdampf von Lösemittel und Wasser gebildeten Brüden kondensiert, die Kondensate in eine an Lösemittel reiche Phase mit einem kleinen Anteil Wasser und in eine wäßrige Phase mit einem kleinen Anteil Lösemittel getrennt, die wäßrige Phase in eine an Lösemittel reiche Phase und Wasser zerlegt und die beiden lösemittelreichen Phasen in den Kreislauf zurückgeführt werden.

Im Rahmen der weiteren Ausgestaltung des erfindungsgemäßen Verfahrens werden dem in vollentsalztem Wasser dispergierten Rückstand der ersten Destillationsstufe bis zu 5 Gew.%, vorzugsweise 1 bis 2 Gew.% Cosolventien, z.B. Amine, Aminoalkohole und/oder Netzmittel, wie Paranonylphenol, Octylphenol, zugesetzt.

Nach einem weiteren Erfindungsmerkmal kann es zweckmäßig sein, wenn die Dispersion vor der Destillation filtriert wird, um eine Aufkonzentration des Bindemittels im Retentat auf 10 bis 30 % zu erzielen. Das Permeat wird in eine lösemittelreiche Phase mit einem kleinen Anteil Wasser und in eine wäßrige Phase mit einem kleinen Anteil Lösemittel, die wäßrige Phase in eine lösemittelreiche Phase und in Wasser getrennt und die beiden lösemittelreichen Phasen in den Kreislauf zurückgeführt.

Der Rückstand der ersten Destillationsstufe wird zweckmäßigerweise in einem Teil des am Ende der Aufbereitung anfallenden Wassers dispergiert.

Je nach Bedarf kann der bei der zweiten Destillationsstufe anfallende Rückstand durch Zugabe von bis zu 5 Gew.%, vorzugsweise 1 bis 2 Gew.% Cosolventien stabilisiert werden.

Das Wasserlack-Koagulat bzw. -Filtrat wird zweckmäßigerweise durch den Zusatz von organischem Lösemittel im Verhältnis Lösemittel zu Koagulat bzw. Filtrat von 0,5:1 bis 10:1, vorzugsweise 1:1 bis 4:1, gelöst.

Das bei der anschließenden Filtration anfallende Retentat wird bei einer Temperatur von 140 bis 200°C getrocknet.

Der Rückstand der Destillation des Permeats wird zweckmäßigerweise mit vollentsalztem Wasser im Verhältnis Wasser zu Rückstand von 1:1 bis 10:1, vorzugsweise 2:1 bis 5:1, vermischt.

Die beiden Destillationsstufen werden bei einer Temperatur von 30 bis 70°C und einem Vakuum von 5 bis 50 mbar betrieben.

Zum Lösen des Wasserlack-Koagulats bzw. -Filtrats werden insbesondere organische Lösemittel eingesetzt, die die polaren Wasserlacke lösen können und gleichzeitig eine Mischungslücke mit Wasser sowie einen nicht zu hohen Siedepunkt besitzen. Diese Bedingung erfüllen Alkohole, Ester, Ketone, insbesondere n-Butanol, iso-Butanol, Gemisch n-Buac/n-Butanol, 2-Butoxyethylacetat, Methoxypropylacetat, bzw. Gemische der genannten Lösemittel. Als Lacke kommen insbesondere Alkyd-Melamin, Polyester, Acrylat, Epoxid und Epoxiester in Betracht.

Die erfindungsgemäße Vorrichtung zur Durchführung des Verfahrens besteht aus einem Mischer, wie Dissolver, Mazerator, Perlmühle, zum Einbringen eines Lösemittels in das Wasserlack-Koagulat bzw. -Filtrat, einem Mikrofilter zum Trennen des Solvats in das Bindemittel enthaltende, an Lösemittel reiche Permeat und das Pigmente/Füllstoffe enthaltende, an Lösemittel reiche Retentat, einem Dünnschicht- oder Schaufeltrockner zum Trocknen des Retentats der Mikrofiltration, einem Dünnschichtverdampfer zum Aufkonzentrieren des Permeats der Mikrofiltration, einem weiteren Mischer zum Dispergieren des Rückstands des Dünnschichtverdampfers mit vollentsalztem Wasser, einem weiteren Dünnschichtverdampfer zum Aufkonzentrieren der Dispersion, jeweils einem dem Trockner und den beiden Dünnschichtverdampfern nachgeschalteten Kondensator zum Kondensieren des aus dem Trockner und den beiden Dünnschichtverdampfern stammenden Brüdens, einem Abscheider zur Trennung der Kondensate in eine lösemittelreiche und eine wäßrige Phase und einer Pervaporationsanlage zur Trennung der wäßrigen Phase in Wasser und eine lösemittelreiche Phase.

Eine weitere Ausbildung der Vorrichtung ist darin zu sehen, daß dem zweiten Dünnschichtverdampfer eine mit dem Abscheider verbundene Ultrafiltration vorgeschaltet ist, um das Aufkonzentrieren der Dispersion und das Abscheiden einer wäßrigen Phase mit einem Anteil an Lösemittel zu erreichen.

Dem zweiten Dünnschichtverdampfer kann ein Mischer nachgeordnet sein, um in dem Rückstand Cosolventien zu dispergieren.

Anstelle der Pervaporationsanlage kann auch eine Rektifikationskolonne oder eine Umkehrosmose angeordnet sein.

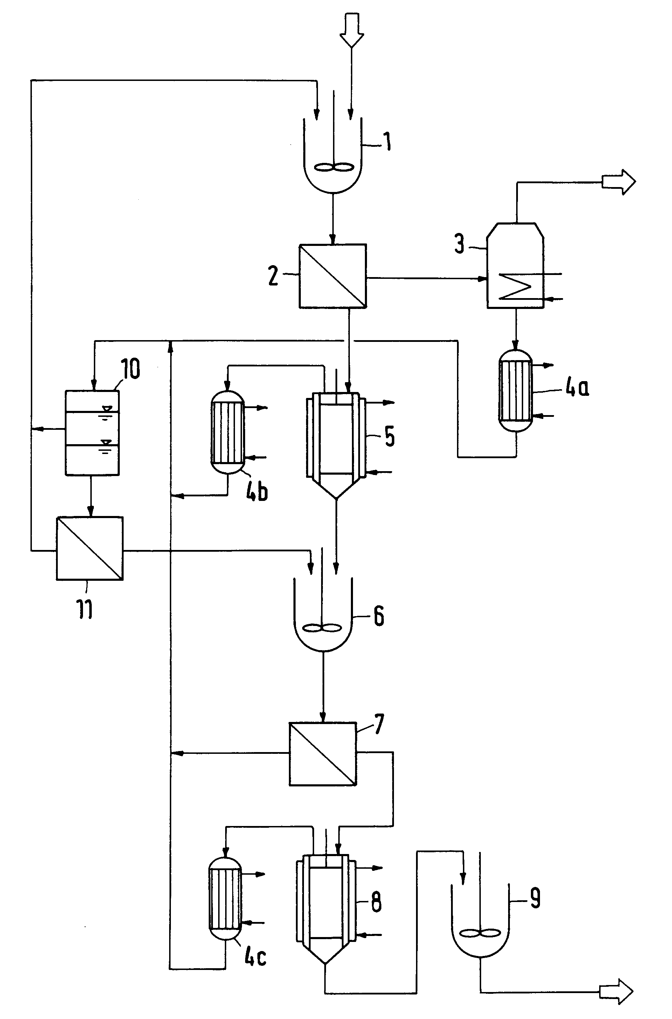

Die Erfindung ist nachstehend näher und beispielhaft anhand eines in der Zeichnung dargestellten Verfahrensflußbildes erläutert.

Stündlich werden dem Mischer (1) 1000 kg Wasserlack-Koagulat der Zusammensetzung 50 % Wasser, 25 % Bindemittel, 20 % Pigmente/Füllstoffe und 5 % organische Lösemittel zusammen mit 3000 kg Lösemittel, bestehend aus 85 % iso-Butanol und 15 % Wasser, zugeführt. Das in dem Mischer (1) gebildete Solvat wird der Mikrofiltrationsanlage (2) aufgegeben, in der das Solvat in 3000 kg Permeat, bestehend aus 7 % Bindemittel, 69 % iso-Butanol, 24 % Wasser, und 1000 kg Retentat, bestehend aus 20 % Pigmente/Füllstoffe, 3 % Bindemittel, 24 % Wasser, 53 % iso-Butanol, getrennt wird. Das Retentat wird anschließend in dem Schaufeltrockner (3) in 230 kg Pigmente/Füllstoffe und 770 kg Kondensat, bestehend aus 31 % Wasser und 69 % iso-Butanol, zerlegt. Das Permeat wird in dem Dünnschichtverdampfer (5) auf 367 kg Rückstand aus 60 % Bindemittel, 38 % iso-Butanol und 2 % Wasser aufkonzentriert. Dabei fallen 2633 kg Destillat an, die sich aus 27 % Wasser und 73 % iso-Butanol zusammensetzen. Der Rückstand des Dünnschichtverdampfers (5) wird in einem Mischer (6) in 1835 kg vollentsalztem Wasser, das 1 % iso-Butanol enthält, dispergiert und anschließend 2202 kg der Dispersion, bestehend aus 82 % Wasser, 10 % Bindemittel und 8 % iso-Butanol, einer Ultrafiltrationsanlage (7) zugeführt, in der eine Trennung in 900 kg Retentat, bestehend aus 25 % Bindemittel, 68 % Wasser und 7 % iso-Butanol, und 1302 kg Permeat, bestehend aus 91 % Wasser und 9 % Butanol, erfolgt. Das Retentat wird dann in einem Dünnschichtverdampfer (8) in 370 kg Rückstand, bestehend aus 61 % Bindemittel, 35 % Wasser und 4 % iso-Butanol, und in 530 kg Destillat, bestehend aus 91 % Wasser und 9 % iso-Butanol, zerlegt. Der aus dem Schaufeltrockner (3) austretende Brüden sowie die in den Dünnschichtverdampfern (5) und (8) entstandenen Destillate werden jeweils in einem Kondensator (4a), (4b) und (4c) kondensiert. Die Kondensate werden zusammen mit dem Retentat der Ultrafiltrationsanlage (7) auf den Abscheider (10) gegeben, in dem eine Trennung in 2800 kg an iso-Butanol reiche Phase, bestehend aus 83,6 % iso-Butanol und 16,4 % Wasser, und 2435 kg wäßrige Phase aus 91,5 % Wasser und 8,5 % iso-Butanol geschieht. Die wäßrige Phase wird in der Pervaporationsanlage (11) in 200 kg iso-Butanolreiche Phase aus 98 % iso-Butanol und 2 % Wasser und eine wäßrige Phase mit 99 % Wasser und 1 % iso-Butanol getrennt. Die iso-Butanolreiche Phase wird zusammen mit der iso-Butanolreichen Phase aus dem Abscheider (10) wieder dem Mischer (1) zugeführt, während 1835 kg wäßrige Phase zur Dispergierung des Rückstands des Dünnschichtverdampfers (5) im Mischer (6) benutzt werden. Das aus der Pervaporationsanlage (11) austretende Abwasser von 400 kg/h wird der Wasseraufbereitung zugeführt.

Die mit der Erfindung erzielten Vorteile bestehen insbesondere darin, daß der in der zweiten Destillationsstufe anfallende Rückstand im wesentlichen aus Bindemittel und Wasser besteht und als Basis für die Herstellung von Wasserlacken ohne weiteres wieder benutzt werden kann. Der vollständig getrocknete, aus Pigmenten/Füllstoffen und ggf. Koagulationsmittel bestehende Rückstand der Trocknung wird durch Mahlen zerkleinert und kann als Füllstoff beispielsweise bei der Herstellung von Dämmatten, Schwerschichtfolien, Unterbodenschutzmaterialien, etc. eingesetzt werden. Der Bindemittel- und Lösemittelanteil von Wasserlack-Koagulaten bzw. -Filtraten kann somit vollständig in den Materialkreislauf zurückgeführt und der Feststoffanteil vollständig verwertet werden.

## Patentansprüche

1. Verfahren zur kontinuierlichen Aufbereitung von bei der Spritzverarbeitung von Wasserlacken aus dem im Kreislauf geführten Wasser durch Koagulation oder Filtration, insbesondere Ultrafiltration, gewonnenem, 50 bis 80 Gew.% Wasser, 10 bis 30 Gew.% Bindemittel, 1 bis 25 Gew.% Pigmente/Füllstoffe und 0 bis 15 Gew.% organische Lösemittel enthaltendes Wasserlack-Koagulat bzw. -Filtrat, dadurch gekennzeichnet, daß das Koagulat bzw. Filtrat mit organischem Lösemittel gemischt, das gebildete Solvat filtriert, das an Lösemittel reiche, Wasser, Pigmente/Füllstoffe und einen kleinen Anteil Bindemittel enthaltende Retentat getrocknet, das an Lösemittel reiche, Bindemittel und Wasser enthaltende Permeat destilliert, der an Bindemittel reiche, Lösemittel und einen kleinen Anteil Wasser aufweisende Rückstand der Destillation in vollentsalztem Wasser dispergiert, die Dispersion destilliert, die beim Trocknen des Retentats und der Destillation des Permeats und der Destillation der Dispersion anfallenden, aus Sattdampf von Lösemittel und Wasser gebildeten Brüden kondensiert, die Kondensate in eine an Lösemittel reiche Phase mit einem kleinen Anteil Wasser und eine wäßrige Phase mit einem kleinen Anteil Lösemittel getrennt, die wäßrige Phase in eine lösemittelreiche Phase und in Wasser zerlegt und die beiden lösemittelreichen Phasen in den Kreislauf zurückgeführt werden.

2. Verfahren nach Anspruch 1, dadurch gekennzeichnet, daß dem in vollentsalztem Wasser dispergierten Rückstand der Destillation bis zu 5 Gew.%, vorzugsweise 1 bis 2 Gew.% Cosolventien zugesetzt werden.

3. Verfahren nach einem der Ansprüche 1 und 2, dadurch gekennzeichnet, daß der in vollentsalztem Wasser dispergierte Rückstand der Destillation filtriert wird.

4. Verfahren nach Anspruch 3, dadurch gekennzeichnet, daß das Retentat in eine an Lösemittel reiche Phase mit einem kleinen Anteil Wasser und in eine wäßrige Phase mit einem kleinen Anteil Lösemittel sowie die wäßrige Phase in eine lösemittelreiche Phase und in Wasser getrennt werden und die beiden lösemittelreichen Phasen in den Kreislauf zurückgeführt werden.

5. Verfahren nach einem der Ansprüche 1 bis 4, dadurch gekennzeichnet, daß zur Dispergierung des Rückstands der ersten Destillationsstufe ein Teil des anfallenden Wassers verwendet wird.

6. Verfahren nach einem der Ansprüche 1 bis 5, dadurch gekennzeichnet, daß der Rückstand der Destillation der Dispersion mit Cosolventien versetzt wird.

7. Verfahren nach einem der Ansprüche 1 bis 6, dadurch gekennzeichnet, daß das Koagulat bzw. Filtrat mit Lösemittel im Verhältnis Lösemittel zu Koagulat bzw. Filtrat von 0,5:1 bis 10:1, vorzugsweise 1:1 bis 4:1, vermischt wird.

8. Verfahren nach einem der Ansprüche 1 bis 7, dadurch gekennzeichnet, daß das Retentat bei einer Temperatur von 140 bis 200°C getrocknet wird.

9. Verfahren nach einem der Ansprüche 1 bis 8, dadurch gekennzeichnet, daß der Rückstand der Destillation des Permeats mit Wasser im Verhältnis Wasser zu Kondensat von 1:1 bis 10:1, vorzugsweise 2:1 bis 5:1, vermischt wird.

10. Verfahren nach einem der Ansprüche 1 bis 9, dadurch gekennzeichnet, daß die Destillationen bei einer Temperatur von 30 bis 70°C und einem Vakuum von 5 bis 50 mbar durchgeführt werden.

11. Vorrichtung zur Durchführung des Verfahrens nach einem der Ansprüche 1 bis 10, gekennzeichnet durch einen Mischer zum Einbringen eines organischen Lösemittels in das Overspray-Koagulat bzw. -Filtrat, einen Mikrofilter zum Trennen des gebildeten Solvats in das Bindemittel enthaltende, an Lösemittel reiche Permeat und das Pigmente/Füllstoffe enthaltende, an Lösemittel reiche Retentat, einen Dünnschicht- oder Schaufeltrockner zum Trocknen des Retentats, einen Dünnschichtverdampfer zum Aufkonzentrieren des Permeats, einen weiteren Mischer zum Dispergieren des Rückstands des Dünnschichtverdampfers mit vollentsalztem Wasser, einen weiteren Dünnschichtverdampfer zum Aufkonzentrieren der Dispersion, einen jeweils dem Trockner und den beiden Dünnschichtverdampfern nachgeschalteten Kondensator zum Kondensieren des aus dem Trockner und den Dünnschichtverdampfern stammenden Brüdens, einen Abscheider zur Trennung der Kondensate in eine an Lösemittel reiche und eine wäßrige Phase und eine Pervaporationsanlage zur Trennung der wäßrigen Phase in Wasser und eine lösemittelreiche Phase.

12. Vorrichtung nach Anspruch 11, gekennzeichnet durch eine dem zweiten Dünnschichtverdampfer vorgeschaltete, mit dem Abscheider verbundene Ultrafiltrationsanlage zum Aufkonzentrieren der Dispersion und Abscheiden einer wäßrigen Phase mit einem Anteil an Lösemittel.

13. Vorrichtung nach einem der Ansprüche 11 und 12, gekennzeichnet durch einen dem zweiten Dünnschichtverdampfer nachgeordneten Mischer zur Dispergierung des Rückstands mit Cosolventien.

14. Vorrichtung nach einem der Ansprüche 11 bis 13, dadurch gekennzeichnet, daß anstelle der Pervaporationsanlage eine Rektifikationskolonne oder eine Umkehrosmose angeordnet ist.

## Claims

1. A method for the continuous treatment of water enamel coagulate or filtrate containing 50 to 80% by weight water, 10 to 30% by weight binder, 1 to 25% by weight pigments/fillers and 0 to 15% by weight organic solvents, which is recovered upon the spray processing of water enamels from the recycled water by coagulation or filtration, in particular ultrafiltration, characterised in that the coagulate or filtrate is mixed with organic solvent, the resulting solvate is filtered, the retentate which is rich in solvent and contains water, pigments/fillers and a small content of binder is dried, the permeate which is rich in solvent and contains binder and water is distilled, the residue of the distillation which is rich in binder and contains solvent and a small amount of water is dispersed in demineralised water, the dispersion is distilled, the vapours formed from saturated vapour of solvent and water produced upon drying of the retentate and the distillation of the permeate and the distillation of the dispersion are condensed, the condensates are separated into a phase rich in solvent with a small content of water and an aqueous phase with a small content of solvent, the aqueous phase is broken down into a solvent-rich phase and water and the two solvent-rich phases are recirculated.

2. A method according to Claim 1, characterised in that up to 5% by weight, preferably 1 to 2% by weight, co-solvents are added to the residue of the distillation which is dispersed in demineralised water.

3. A method according to one of Claims 1 and 2, characterised in that the residue of the distillation dispersed in demineralised water is filtered.

4. A method according to claim 3, characterised in that the retentate is separated into a phase rich in solvent with a small content of water and an aqueous phase with a small content of solvent, and the aqueous phase is separated into a solvent-rich phase and water and the two solvent-rich phases are recirculated.

5. A method according to one of Claims 1 to 4, characterised in that a portion of the water produced is used for dispersion of the residue of the first distillation stage.

6. A method according to one of Claims 1 to 5, characterised in that co-solvents are added to the residue of the distillation of the dispersion.

7. A method according to one of Claims 1 to 6, characterised in that the coagulate or filtrate is mixed with solvent in a ratio of solvent to coagulate or filtrate of 0.5:1 to 10:1, preferably 1:1 to 4:1.

8. A method according to one of Claims 1 to 7, characterised in that the retentate is dried at a temperature of 140 to 200°C.

9. A method according to one of Claims 1 to 8, characterised in that the residue of the distillation of the permeate is mixed with water in the ratio of water to condensate of 1:1 to 10:1, preferably 2:1 to 5:1.

10. A method according to one of Claims 1 to 9, characterised in that the distillations are performed at a temperature of 30 to 70°C and under a vacuum of 5 to 50 mbar.

11. An apparatus for performing the method according to one of Claims 1 to 10, characterised by a mixer for introducing an organic solvent into the overspray coagulate or filtrate, a microfilter for separating the solvate formed into the binder-containing permeate which is rich in solvent and the retentate containing pigments/fillers which is rich in solvent, a film dryer or blade dryer for drying the retentate, a film evaporator for concentrating the permeate, an additional mixer for dispersing the residue of the film evaporator with demineralised water, an additional film evaporator for concentrating the dispersion, a condenser succeeding each of the dryer and the two film evaporators for condensing the vapours coming from the dryer and the film evaporators, a separator for separating the condensates into a phase rich in solvent and an aqueous phase and a pervaporation installation for separating the aqueous phase into water and a solvent-rich phase.

12. An apparatus according to claim 11, characterised by an ultrafiltration installation connected to the separator and preceding the second film evaporator, for concentrating the dispersion and separating off an aqueous phase having a content of solvent.

13. An apparatus according to one of Claims 11 and 12, characterised by a mixer succeeding the second film evaporator for dispersing the residue with co-solvents.

14. An apparatus according to one of Claims 11 to 13, characterised in that a rectifying column or a reverse osmosis stage is provided instead of the pervaporation installation.

## Revendications

1. Procédé de traitement en continu de coagulat ou de filtrat de peinture à l'eau, obtenu, lors du traitement de pulvérisation de peinture à l'eau, de l'eau circulant en circuit fermé, par coagulation ou par filtration, notamment par ultrafiltration et contenant de 50 à 80 % en poids d'eau, de 10 à 30 % en poids de liant, de 1 à 25 % en poids de pigments/charges et de 0 à 15 % en poids de solvant organique, caractérisé en ce qu'il consiste à mélanger le coagulat ou le filtrat à du solvant organique, à filtrer le solvat formé, à sécher le rétentat riche en solvant et contenant de l'eau, des pigments/charges et une petite proportion de liant, à distiller le perméat riche en solvant et contenant du liant et de l'eau, à disperser dans de l'eau entièrement désionisée, le solvant riche en liant et du résidu de la distillation contenant une petite proportion d'eau, à distiller la dispersion, à condenser les buées formées à partir de la vapeur saturée, du solvant et de l'eau et qui se forment lors du séchage du rétentat et de la distillations du perméat et de la distillation de la dispersion, à séparer les condensats en une phase riche en solvant ayant une petite proportion d'eau et en une phase aqueuse ayant une petite proportion de solvant, à décomposer la phase aqueuse en une phase riche en solvant et en eau et à retourner les deux phases riches en solvant au circuit.

2. Procédé suivant la revendication 1, caractérisé en ce qu'il consiste à ajouter au résidu de la distillation dispersée dans de l'eau entièrement désionisée jusqu'à 5 % en poids, de préférence de 1 à 2 % en poids de cosolvants.

3. Procédé suivant l'une des revendications 1 à 2, caractérisé en ce qu'il consiste à filter le résidu de la distillation dispersée dans de l'eau entièrement désionisée.

4. Proccédé suivant la revendication 3, caractérisé en ce qu'il consiste à séparer le rétentat en une phase riche en solvant ayant une petite proportion d'eau en une phase aqueuse ayant une petite proportion de solvant ainsi que la phase aqueuse en une phase riche en solvant et en eau et à retourner les deux phases riches en solvant dans le circuit.

5. Procédé suivant l'une des revendications 1 à 4, caractérisé en ce qu'il consiste à utiliser pour disperser le résidu du premier stade de distillation une partie de l'eau qui se forme.

6. Procédé suivant l'une des revendications 1 à 5, caractérisé en ce qu'il consiste à mélanger le résidu de la distillation de la dispersion en des cosolvants.

7. Procédé suivant l'une des revendications 1 à 6, caractérisé en ce qu'il consiste à mélanger le coagulat ou le filtrat à du solvant en un rapport solvant à coagulat ou filtrat de 0,5:1 à 10:1, de préférence à 1:1 à 4:1.

8. Procédé suivant l'une des revendications 1 à 7, caractérisé en ce qu'il consiste à sécher le rétentat à une température de 140 à 200 °C.

9. Procédé suivant l'une des revendications 1 à 8, caractérisé en ce qu'il consiste à mélanger le résidu de la distillation du perméat à de l'eau en le rapport eau à condensat de 1:1 à 10:1, de préférence de 2:1 à 5:1.

10. Procédé suivant l'une des revendications 1 à 9, caractérisé en ce qu'il consiste à effectuer les distillations à une température de 30 à 70°C et sous un vide de 5 à 50 mbar.

11. Installation pour la mise en oeuvre du procédé suivant l'une des revendications 1 à 10, caractérisé par un mélangeur pour introduire un solvant organique dans le coagulat ou le filtrat d'overspray, un microfiltre pour séparer le solvat formé en le perméat contenant le liant et riche en solvant et en le rétentat contenant les pigments/charges riches en solvant, un séchoir à couche mince ou à pales pour sécher le rétentat, un évaporateur à couche mince pour concentrer le perméat, un autre mélangeur pour disperser le résidu de l'évaporateur à couche mince par de l'eau entièrement désionisée, un autre évaporateur à couche mince pour concentrer la dispersion, un condenseur monté en aval du séchoir et des deux évaporateurs à couche mince et destinés à condenser les buées provenant du séchoir et des évaporateurs à couche mince, un séparateur destiné à séparer les condensats en une phase riche en solvant et en une phase aqueuse et une installation d'évaporation à travers une membrane pour séparer la phase aqueuse en eau et en une phase riche en solvant.

12. Installation suivant la revendication 11, caractérisée par une installation d'ultrafiltration montée en amont du deuxième évaporateur à couche mince reliée au séparateur de destinée à concentrer la dispersion et à séparer une phase aqueuse ayant une proportion de solvant.

13. Installation suivant l'une des revendications 1 à 11 et 12, caractérisée par un mélangeur en aval du deuxième évaporateur à couches minces et destiné à disperser le résidu avec des cosolvants.

14. Installation suivant l'une des revendications 11 à 13, caractérisée en ce qu'il est prévu au lieu de l'installation d'évaporation à travers une membrane une colonne de rectification ou une osmose inverse.
